# EUROPEAN PATENT SPECIFICATION

(11) **EP 0 456 248 B1**
(45) Date of publication and mention of the grant of the patent: **05.08.1998**
(21) Application number: 91107602.4
(22) Date of filing: 10.05.1991
(51) Int. Cl.: H04N 7/14

(54) **Video phone**
Bildfernsprechgerät
Vidéophone

(30) Priority: 11.05.1990 JP 120038/90
(43) Date of publication of application: 13.11.1991
(73) Proprietor: KABUSHIKI KAISHA TOSHIBA, Kawasaki-shi, Kanagawa-ken 210 (JP)
(72) Inventor: Ueno, Hideyuki, Fujisawa-shi, Kanagawa-ken (JP); Ozeki, Kazuo, Tokyo-to (JP); Dachiku, Kenshi, Matida-shi, Tokyo-to (JP); Watanabe, Toshiaki, Kawasaki-shi, Kanagawa-ken (JP); Ida, Takashi, Ichikawa-shi, Tiba-ken (JP); Matsumura, Yoshikuni, Kawasaki-shi, Kanagawa-ken (JP)
(74) Representative: Lehn, Werner, Dipl.-Ing.

(56) References cited:
- EP-A- 0 320 828
- DE-A- 2 648 534
- DE-A- 3 104 996
- DE-A- 3 842 356
- DE-A- 3 923 361
- FR-A- 2 056 623
- US-A- 3 588 336
- SIEMENS ZEITSCHRIFT. vol. 47, no. 4, April 1973, ERLANGEN DE pages 201 - 204 SIEGFRIED GUNTERSDORFER 'SIEMENS VIDEOSET 101, EIN NEUES BILDTELEFON'
- IEEE TRANSACTIONS ON COMMUNICATION TECHNOLOGY vol. 17, no. 2, April 1969, NEW YORK US pages 318 - 323 REMBERT R. STOKES 'HUMAN FACTORS AND APPEARANCE DESIGN CONSIDERATIONS OF THE MOD II PICTUREPHONE STATION SET'
- REVIEW OF THE ELECTRICAL COMMUNICATION LABORATORIES vol. 33, no. 4, 1985, pages 639 - 646 T. HISAKI ET AL. 'VIDEO COMMUNICATION TERMINALS FOR BROADBAND SWITCHING NETWORK SERVICES'

## Description

### BACKGROUND OF THE INVENTION

### 1. Field of the Invention

The present invention relates to a video phone for transmitting moving or still pictures between a first party and a second party, and in particular to a video phone for taking a frontal picture of the first party and displaying a frontal picture of the second party before the first party for easy viewing.

### 2. Description of Background Art

Recently, the use of video phones for transmitting a moving picture has been rapidly developing along with the increasing use of digital communication networks.

Normally, to take a picture of the first party adequately to easily telecommunicate with the second party and to display the second party's picture in a suitable position for easy viewing by the first party in a conventional video phone, each party must turn the body of the respective video phone around or move to the front of the video phone to view a frontal picture of the other's picture.

However, the above conventional video phone is large so that the video phone cannot be installed in a small area. In other words, the phone is not adequate for domestic use or use in a public phone booth.

On the other hand, it is reasonable to assume that the above drawbacks will be solved by using a wall-mounted video phone in the future. However, in such a case, the video phone body will be fixed to a wall and therefore cannot be turned around.

Therefore, such a video phone cannot take a frontal picture of the first party or cannot display a frontal picture of the second party for easy viewing by the first party. In other words, the two parties cannot transmit their pictures with good mutual understanding.

The document SIEMENS ZEITSCHRIFT, vol. 47, no. 4, April 1973, ERLANGEN, DE, pages 201 - 204, SIEGFRIED GUNTERSDORFER "SIEMENS VIDEOSET 101, ein neues Bildtelefon" discloses a combined arrangement of a telephone and a display means, wherein the display means is formed like a computer monitor. This monitor has a camera incorporated at the upper side thereof. The monitor can be turned up to 6° in the vertical direction. As the camera and the monitor are combined the camera is moved together with the camera. Further, transmission means for transmitting the picture taken by the camera are provided.

US-A-3 588 336 discloses a hospital communication system wherein camera and display means are provided at the patient's room and at the nurse's station for a communication between a patient and a nurse.

The document IEEE TRANSACTIONS ON COMMUNICATIONS TECHNOLOGY, vol. 17, no. 2, April 1969, NEW YORK, US, pages 318 - 323, REMBERT R. STOKES "Human factors and appearance design considerations of the MOD II PICTUREPHONE STATION SET" discloses a picturephone wherein a display and camera means are designed by taking into account some human factors, as for example the seated height. According to this document the camera means and the display means are controlled in common so as to achieve the best result of a transmitted picture. The vertical positioning of the display is a function of the comfortable head inclination.

FR-A-2 056 623 discloses a system for a video phone with a display means, the arrangement of which is inclined. There is no disclosure of any possible movement of this video phone or some components thereof in this document.

### SUMMARY OF THE INVENTION

Starting from a video phone wherein the height can be adjusted as described, for example, in the first of the above-mentioned documents, it is the object of the present application to improve a (public or wall-mounted type) video phone so that it can be easily operated and is able to take a picture and to display a picture at a suitable position.

This object is solved by a video phone as described in claim 1. The subclaims show further advantageous further developments of the video phone of the present application.

Especially, according to the present invention, the height of the display means (and also the photographing means) is adjusted corresponding to a user's eye position by movement in a vertical direction by means of a setting means.

It is preferable that the disply means is a wall-mounted type.

In this case, a thin display means can be produced even if the display means is a wide screen. Therefore, the video phone is easily installed even if the area for installing the video phone is small.

Also, it is preferable that the position for displaying the second party's picture in the display means be selected at a height equivalent to the height of the first party's eyes, since this is the easiest position for viewing the second party.

Also, it is preferable that the photographing means take a picture of the first party at the same height at which the second party's picture is displayed by the display means.

In the above configuration, the first party selects the height of the second party's picture as the same height as the first party's eyes so that the picture is displayed in the easiest position for viewing. Also, the photographing means is set in advance to simultaneously take the first party's picture at the same height as the second party's picture displayed by the display means because the face of the first party is positioned at the height of the second party's picture. Therefore, the picture of the first party's face is naturally transmitted to the second party through the transmitting means.

Accordingly, regardless of whether the first party is an adult or a child, that party can naturally transmit the picture of his own face to the second party without considering the position by selecting the height of the second party's picture displayed by the photographing means at his own eye height. This position is the easiest position to adjust.

As mentioned above, no consideration for the position for taking a picture is needed. Also, any child or older person can easily operate the video phone instinctively without reading a special operating manual because the video phone is set up to display the second party's picture before the first party to which he can adjust unconsciously. In other words, the video phone according to the present invention will be suitable not only for business use but also for domestic use or use in a public telephone booth.

### BRIEF DESCRIPTION OF THE DRAWINGS

Fig.1 is a diagonal view of a video phone according to the present invention, showing a first modification of a first aspect.

Fig. 2 is a block diagram for explaining the operation of a liquid crystal display for the video phone shown in Fig. 1.

Fig. 3 is a timing chart for explaining the operation in the display shown in Fig. 2.

Fig. 4 is a diagonal view of a video phone according to the present invention, showing a second modification of the first aspect.

Fig. 5A is a diagonal view of a video phone according to the present invention, showing a third modification of the first aspect.

Fig. 5B is a side view of the video phone shown in Fig. 5A.

Fig. 6A shows schematically a video phone according to the present invention for explaining the adjustment of the position of the second party's picture, showing a fourth modification of the first aspect.

Fig. 6B is a front view of the video phone shown in Fig. 6A.

Fig. 7A is a diagonal view of a video phone according to the present invention, showing a fifth modification of the first aspect.

Fig. 7B is a front view of an operating section of the video phone shown in Fig. 7A, shown in a enlarged scale.

Fig. 8A is a diagonal view of a video phone according to the present invention, showing a sixth modification of the first aspect.

Fig. 8B shows schematically the video phone shown in Fig. 8A for explaining the operation.

Fig. 9A is a perspective view of a video phone according to the present invention, showing a seventh modification of the first aspect.

Fig. 9B is a structural view of a driving section of the video phone shown in Fig. 9A, shown in a enlarged scale.

Fig. 9C is perspective views of a floor of a public phone booth provided with the video phone shown in Fig. 9A, shown in a enlarged scale.

Fig. 10 is a diagonal view of a video phone according to the present invention, showing an eighth modification of the first aspect.

### DESCRIPTION OF THE SPECIFIC EMBODIMENT

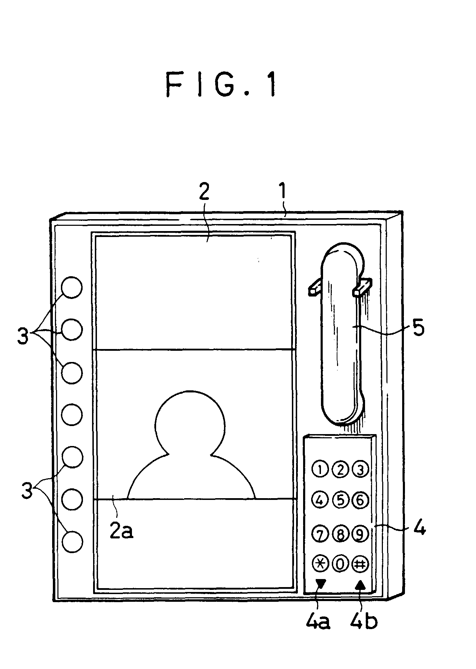

Preferred embodiments are described with reference to Fig. 1 to Fig. 10.

Fig.1 is a diagonal view of a video phone according to the present invention, showing a first modification of a first aspect.

The video phone comprises:
a video phone body 1 for taking a picture of a first party and displaying a picture of a second party, the body 1 being for a wall-mounted use;
a receiving section (not shown) for receiving the second party's picture before providing it to the body 1;
a transmitting section (not shown) for transmitting the first party's picture produced by the body 1 to the second party.

The video phone body 1 comprises:
a liquid crystal display 2 for displaying the second party at a suitable position selected by the first party;
a plurality of television cameras 3 for taking a picture of the first party telecommunicating with the second party face to face while viewing the second party's picture displayed in the display 2, each camera 3 being arranged in the vertical direction and along the display 2;
an operating keyboard 4 for calling up the second party and selecting a suitable position to display the second party's picture in the display 2 by operating a button 4A or 4B; and
a telephone receiver 5 for talking with the second party.

In the above configuration, when the first party takes up the receiver 5, a display area 2A becomes bright and a provisional picture is displayed in the display area 2A. The display area 2A is set in advance to a default position in the display 2. The picture is used to decide a suitable position at which the second party's picture is to be displayed. Therefore, the picture is an outline of a portrait.

Thereafter, by operating the buttons 4A, 4B, the first party adjusts the height of the outline displayed in the display 2 to his own eye height for viewing the picture displayed in the display 2 the most easily. Thereby, one camera 3 which is positioned at almost the same height as the provisional picture's eyes adjusted by the first party is automatically selected to take a picture of the first party. That is, the first party can naturally transmit the picture of his own face to the second party because the first party's face is at almost the same height as the provisional picture's face and the second party's face is displayed to the same height as the provisional picture when the telecommunication is started.

In the other case, it is preferable that the first party's picture taken by the camera 3 be displayed in the display 2 instead of the outline of the portrait.

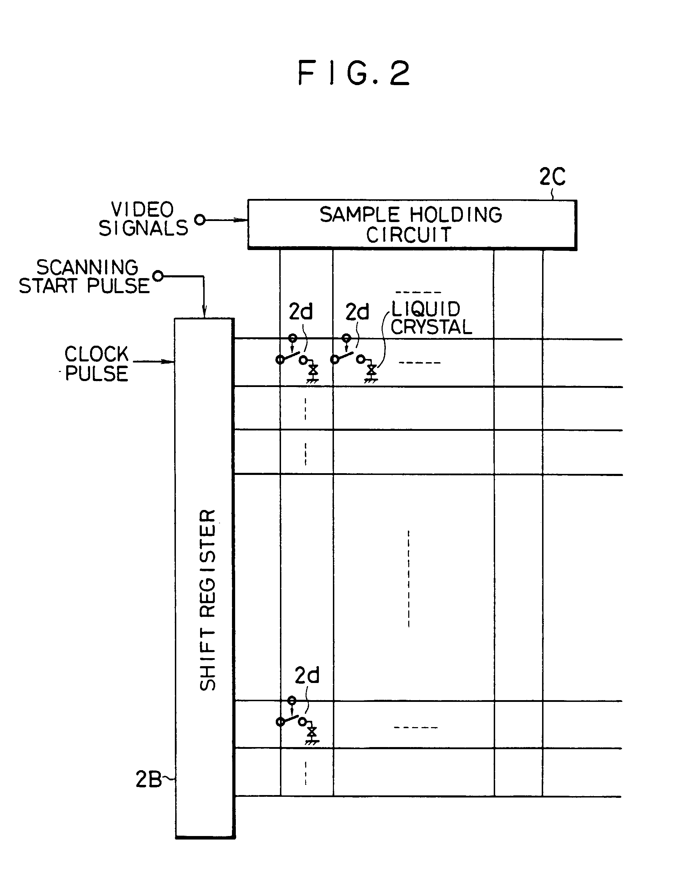

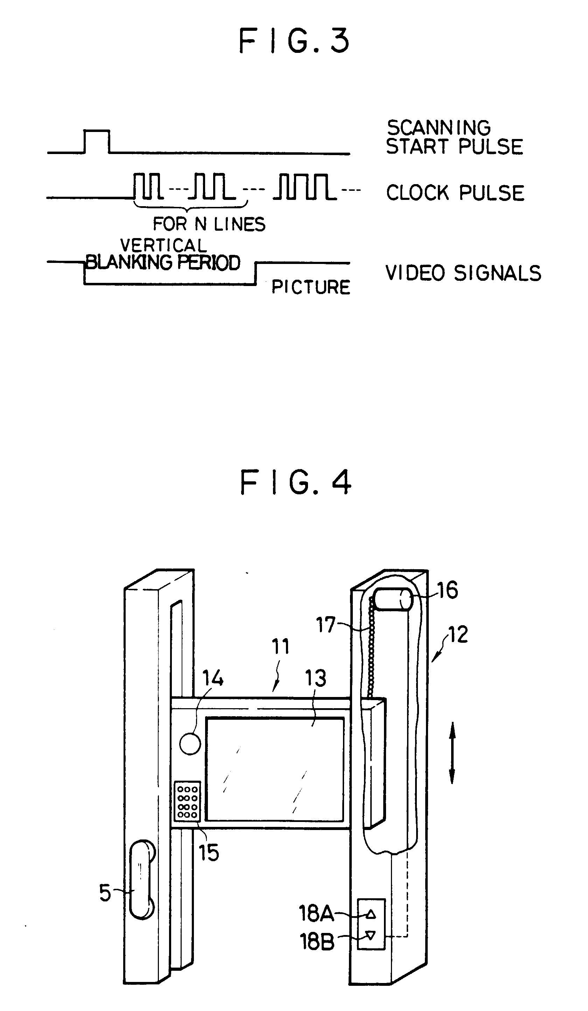

Next, how to select the displayed region in the liquid crystal display (LCD) panel is described with reference to Figs. 2 and 3.

Usually, when the LCD is driven, a scanning start pulse is provided to a shift register 2B in the display 2 and any clock pulse for shifting a scanning line is not provided during a vertical blanking period. Then, the picture is displayed at the top line of the LCD panel. But, in the present invention, as shown in Fig. 3, when the first party has adjusted the top of the display area 2A to the (N + 1)th scanning line from the top portion of the display 2, N clock pulses are automatically provided during the vertical blanking period so that N scanning lines are shifted before the video signals for a first scanning line of the picture displayed in the display 2 is provided to a sample holding circuit 2C. In other words, the display of the picture of the second party is automatically started from the (N + 1)th scanning line.

After completing the vertical blanking period, the video signals which are produced by changing the second party's analog picture to digital signals are held into the sample holding circuit 2C before displaying the second party's picture to the (N + 1)th scanning line. In detail, a group of switches 2D of the (N + 1)th scanning line are closed in synchronization with a following clock pulse so that each picture element is charged by a voltage corresponding to the corresponding video signal.

After completing the display operation in the (N + 1)th scanning line, the display operation in the following scanning lines is carried out in the same manner.

Accordingly, the display area 2A for displaying the second party's picture at the best position is easily adjusted by operating the buttons 4A, 4B.

Also, the display area 2A can continuously be adjusted because the area 2A is changed at every scanning line.

Also, regardless of whether the first party is an adult or a child, that party can naturally transmit the picture of his own face to the second party without considering the photographed position of the first party if the first party adjusts the height of the provisional picture displayed by the camera 3 to his own eye height, that is the easiest position for adjusting.

As mentioned above, no consideration for the position at which is taken a picture is needed. Also, any child or older person can easily operate the video phone instinctively without reading a special operating manual because the video phone is set up to display the second party's picture before the first party to which he can adjust unconsciously. In other words, the video phone according to the present invention will be suitable not only for business use but also for domestic use or use of a public telephone booth.

Next, an other video phone according to the present invention is described with reference to Fig. 4.

Fig. 4 is a diagonal view of the video phone according to a second modification of the first aspect.

The video phone comprises
a video phone body 11 for taking a picture of a first party and displaying a picture of a second party, the body 11 being for a wall-mounted use,
a moving section 12 for moving the body 11 to a suitable height selected by the first party ;
the receiving section (not shown); and
the transmitting section (not shown).

The video phone body 11 comprises:
a liquid crystal display 13 for displaying the second party;
a television camera 14 for taking a picture of the first party telecommunicating with the second party face to face while viewing the second party's picture displayed in the display 13;
an operating keyboard 15 for calling up the second party and selecting a suitable height for the second party's picture displayed in the display 13;
the telephone receiver 5.

The moving section 12 comprises:
a motor 16 for generating driving power;
a chain 17 for transmitting the driving power generated by the motor 16 for moving the body 11 upwards or downwards; and
an operating switch 18 for operating the movement of the body 11 generated by the motor 16 by pressing an up button 18A or a down button 18B.

In the above configuration, the first party operates the operating switch 18 to move the video phone body 11 to this own eye height after lifting the receiver 5. Therefore, the second party's picture is naturally displayed at the height of the first party's eyes.

Also, the camera 14 is moved with the body 11 to the height of the first party's face. Therefore, a picture is taken of the front of the first party so that the second party receives the frontal face picture of the first party.

Accordingly, each party can view a frontal picture of the other's face so that good telecommunication can be carried out.

Also, this modification is economical because only one camera is needed and the display 13 is smaller than that of the first modification.

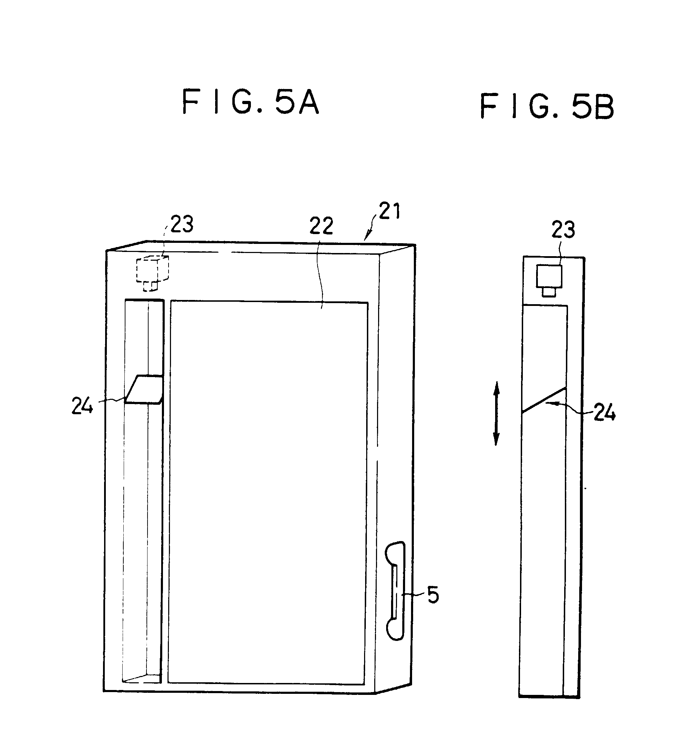

Next, another video phone according to the present invention is described with reference to Figs. 5A and 5B.

Fig. 5A is a diagonal view of the video phone according to a third modification of the first aspect and Fig. 5B is a side view of the video phone.

The video phone comprises:
an immobile video phone body 21 for taking a picture of a first party and displaying a picture of a second party, the body 21 being for wall-mounted use;
the receiving section (not shown); and
the transmitting section (not shown).

The video phone body 21 comprises:
a liquid crystal display 22 for displaying the second party provided through the receiving section;
a television camera 23 for taking a picture of the first party telecommunicating with the second party face to face while viewing the second party's picture displayed in the display 22;
a reflecting mirror 24 for reflecting incident light from the first party to the television camera 23;
a moving section (not shown) for moving the mirror 24 upward or downward to reflect the first party's picture; and
the telephone receiver 5.

In the above configuration, the first party adjusts the height of the mirror 24 to his face height. Therefore, the mirror 24 reflects his face to the camera 24. Thereby, a frontal picture is taken by the camera 24 before being transmitted to the second party through the transmitting section.

Accordingly, the first party and the second party can telecommunicate while viewing each other's faces.

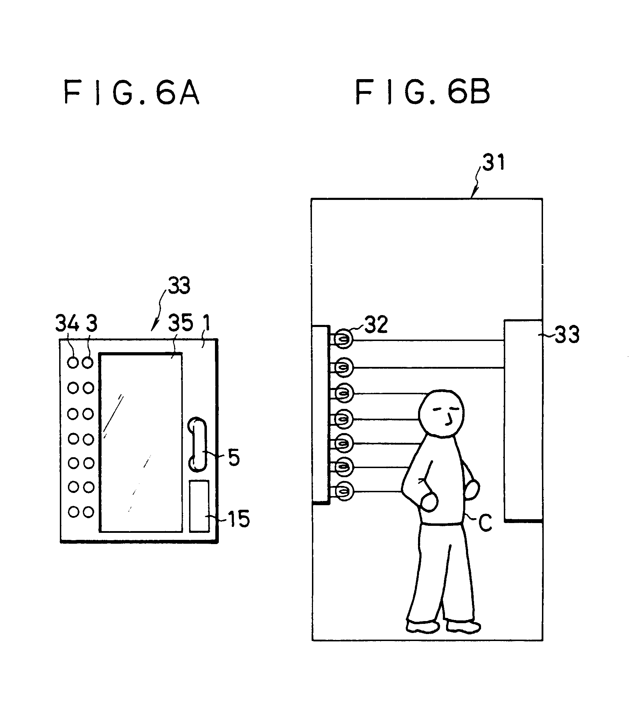

Next, another video phone according to the present invention is described with reference to Figs. 6A and 6B.

In the video phone, a laser beam is used as one kind of energy source described in a claim.
Fig. 6A shows schematically a video phone according to the present invention for explaining the adjustment of the position of the second party's picture, showing a fourth modification of the first aspect. Fig. 6B is a front view of the video phone shown in Fig. 6A.

As shown in Fig. 6A, the first party telecommunicates with a second party in a telephone booth 31 in which a plurality of laser beam sources 32 for generating laser beams are arranged behind the first party and a video phone body 33 operated by the first party is positioned before the first party.

As shown in Fig. 6B, the video phone body 33 comprises:
a plurality of photodetectors 34 for detecting laser beams generated in the laser beam sources 32 across the first party, each photodetector 34 corresponding to one laser beam source 32 and being arranged in a vertical direction;
a decision section (not shown) for deciding the highest position in the photodetectors 34 not detecting laser beams because the laser beams is cut off by the first party;
a selecting section (not shown) for selecting the area in which a second party is displayed after receiving a decision signal provided from the decision section, the top of the second party's picture being identical with the highest position decided by the decision section;
a liquid crystal display 35 for displaying the second party's picture;
the television cameras 3;
the telephone receiver 5; and
the operating keyboard 15.

In the above configuration, a group of laser beams irradiated from the laser beam sources 32 are cut off by the first party who is operating the keyboard 15 and telecommunicating with the second party in front of the display 35. The highest position in the positions of the photodetectors 34 not detecting the laser beams because the laser beams is cut off by the first party is decided by the decision section, thereby the area to display the second party is selected by the selecting section. The selection by the selecting section is as follows.

A photodetector 34 is the highest position of the photodetectors 34 at which the detection of the laser beams irradiated from the laser beam sources 32 is obstructed and is automatically selected and regarded as the top of the first party's head. Then, the second party's picture is displayed onto the display 35 after adjusting the top of the second party's head to the highest position selected by the selecting section. That is, the top of the second party's head is displayed at the position of the top of the first party's head. Also, a camera 3 arranged at the almost same height as the selected photodetector 34 is selected and the first party's picture taken by the selected camera 3 is transmitted to the second party.

Accordingly, the first party can always telecommunicate with the second party without selecting the height at which the second party's picture on the display 35 is displayed or the camera 3 photographing the first party is selected.

It is preferable that a plurality of laser beam sources be positioned on the body 33 and photodetectors be positioned behind the first party.

Also, it is preferable that a plurality of supersonic wave sources as energy current sources and a plurality of supersonic wave detectors be used instead of laser beam sources and photodetectors.

Also, it is preferable that the receiver 5 be provided with a light source or a radio wave source and the height of the first party's face be decided by deciding the light or the radio wave transmitted from the light source or the radio wave source because the height of the receiver 5 is identical with the height of the first party's face during the telecommunication.

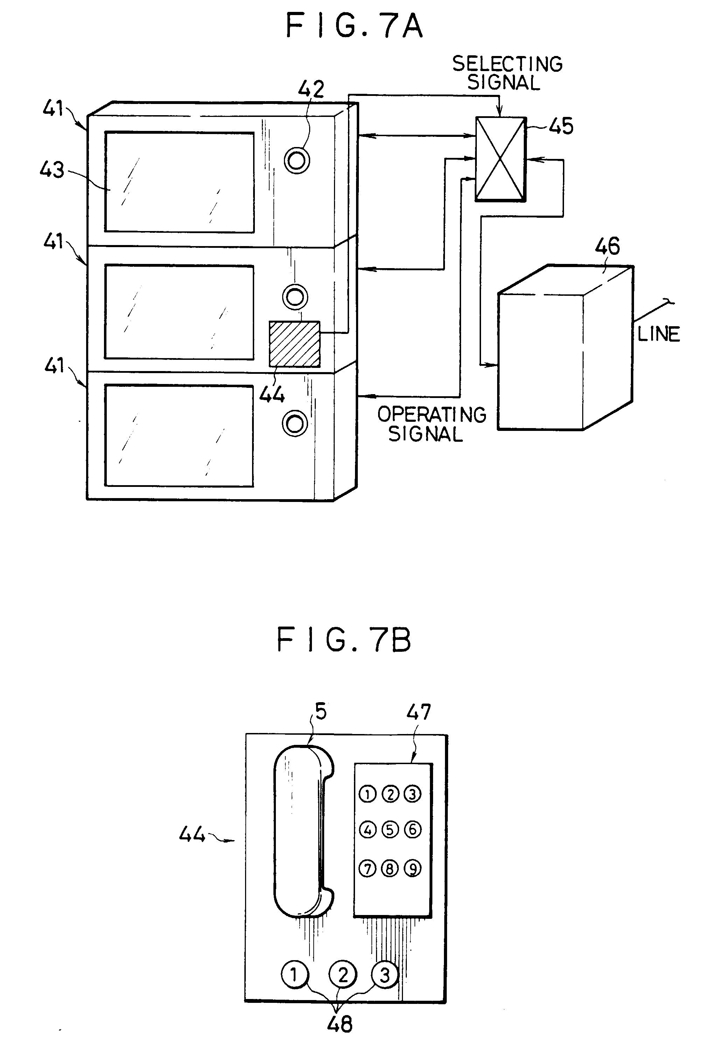

Next, another video phone according to the present invention is described with reference to Figs. 7A and 7B.

Fig. 7A is a diagonal view of a video phone according to the present invention, showing a fifth modification of the first aspect. Fig. 7B is a front view of an operating section of the video phone shown in Fig. 7A, shown in a enlarged scale.

The video phone includes 3 layers of video phone bodies 41, each body 41 being provided with a camera 42 for taking a picture of the first party and a monitoring display 43 for displaying a second party. Also, an operating keyboard 44 for selecting the most suitable body 41 for viewing the second party's picture displayed in the display 43 is integrally formed with the second layer of body 41. Moreover, the video phone includes a selector 45 for providing an operating signal to one body 41 selected by the operating keyboard 44 after receiving a selecting signal provided from the operating keyboard 44, and a video codec 46 for transmitting the first party's picture taken by the camera 42 of the selected body 41 which has started to operate after receiving the operating signal provided from the selector 45 and transmitting another picture provided from the second party side to the selected body 12.

The operating board 44 includes the telephone receiver 5, a dial portion 47 for calling the second party, and selector switches 48 for selecting the most suitable body 41.

In the above configuration, when the first party selects the most suitable body 41 to view the second party's picture in the display 41 in front, the operation in the selected body 12 starts after receiving the operating signal from the selector 45. At this time, the second party's picture is displayed in the display 43 of the selected body 41 after being transmitted through the video codec 46 and the selector 45. Simultaneously, the first party is automatically photographed by the camera 42 of the selected body 41, thereby the first party's picture is transmitted to the second party through the selector 45 and the video codec 46.

Accordingly, the users can select the most suitable body 41 promptly by only one switching operation even if they are of different height. Also, if the height of each body 12 is for example adjusted to correspond to the height of children or adults, the phone video is more convenient.

Also, the first party does not need to select the camera 42 in the same manner as the first modification shown in Fig. 1 because the height of the first party is almost identical with the height of the camera 42 by which the first party takes the picture.

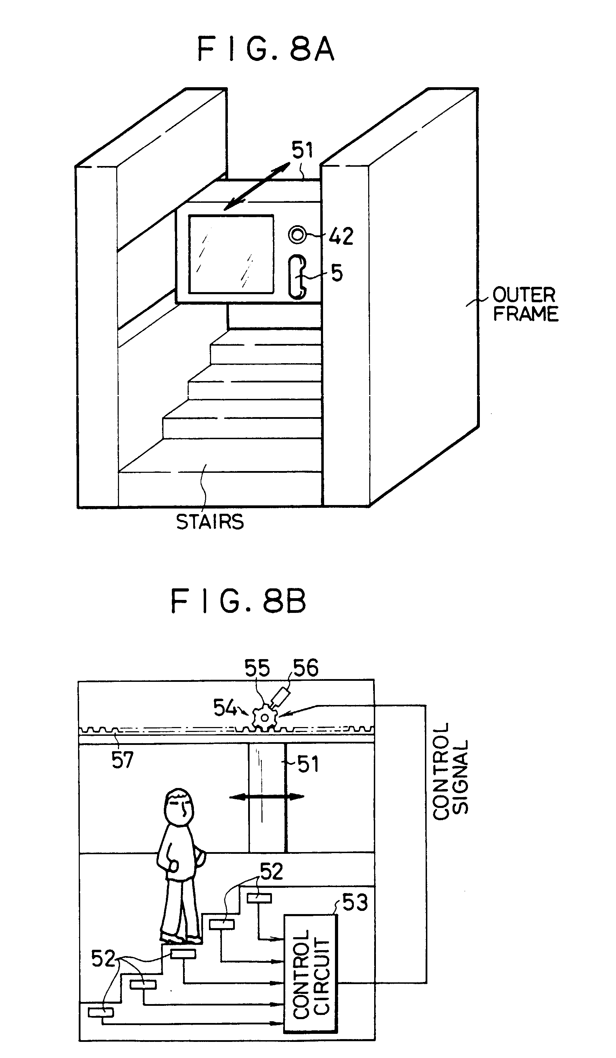

Next, another video phone according to the present invention is described with reference to Figs. 8A and 8B.

Fig. 8A is a diagonal view of a video phone according to the present invention, showing a sixth modification of the first aspect. Fig. 8B shows schematically the video phone shown in Fig. 8A for explaining the operation.

As shown in Figs. 8A and 8B, a video phone system for telecommunication between the two parties at the suitable position by stepping up stairs is described.

The system comprises:
a video phone body 51;
a plurality of pressure sensors 52 for detecting the weight of first party who views a second party's picture displayed in the video phone body 51 and generating a detecting signal which indicates the position of the first party, each sensor 52 being positioned on one stairs;
a control circuit 53 for controlling the horizontal position of the body 51 to display the picture at the most suitable position after receiving the detecting signal provided from one pressure sensor 52;
a moving section 54 for moving the video phone body 51 to the horizontal direction to be set at the most suitable position after receiving a control signal provided from the control circuit 53.
the moving section 54 comprises a pinion 55 attached to a motor 56, and a rack 57 for being driven in the horizontal direction by the pinion 55 rotated by the motor, the rack 57 being attached to an outer frame of the body 51.

In the above configuration, the first party steps up the stairs and adjusts his height to be identical with the height of the video phone body 51 to view the second party's picture displayed in the body 51. At this time, the detecting signal provided from one pressure sensor 52 which detects the first party is transmitted to the control circuit 53 to indicate the horizontal position of the first party. In the control circuit 53, the control signal is transmitted to the moving section 54 to set the body 51 at a specific position away from the first party by a prescribed horizontal distance after receiving the detecting signal from the one pressure sensor 52. In the moving section 54, the body 51 is horizontally moved to the specific position by driving the pinion 55 and the rack 57 after receiving the control signal from the control circuit 53.

Accordingly, the body 51 can be automatically moved to the most suitable position to view the second party's picture before the first party when the first party steps up the stairs to make the height of his eyes identical with the height of body 51 which is the only movement required. That is, the first party does not need to operate any switches or buttons to adjust the height of the body 51. Therefore, anyone including children can easily use the video phone without operating any switch or button.

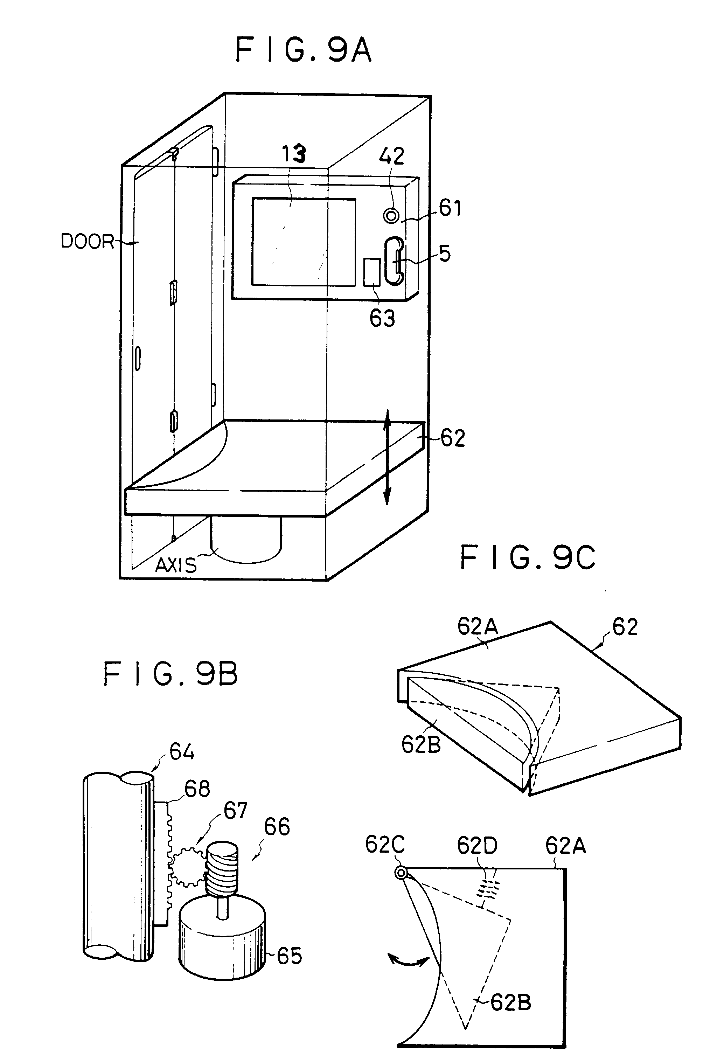

Next, another video phone according to the present invention is described with reference to Figs. 9A and 9C.

Fig. 9A is a perspective view of the video phone which is set into a public telephone booth with a door on one side, showing a seventh modification of the first aspect. Fig. 9B is a structural view of a driving section of the video phone shown in Fig. 9A, shown on a enlarged scale. Fig. 9C shows perspective views of a floor of the booth shown in Fig. 9A, shown on a enlarged scale.

As shown in Fig. 9A, the video phone comprises:
a video phone body 61 for displaying a second party's picture in the display 13;
a floor 62 which moves upward or downward so that a first party views the second party's picture displayed in the body 61 at the height of the first party's eyes;
a height control section 63 for controlling the height of the floor 62, the portion 63 being integrally formed with the body 61; and
a moving section 64 (shown in Fig. 9B) for moving the floor 62 upward or downward corresponding to the operation by which the first party operates the height control section 63, the section 64 being positioned under the ground.

As shown in Fig. 9B, the moving section 64 comprises:
a motor 65 provided with a worm gear 66 at the tip;
a gear 67 for transmitting the rotary motion of the worm gear 66, the gear 67 having a fixed axis;
a rack 68 for changing the rotary motion of the worm gear 66 to the vertical motion of the floor 62.

As shown in Fig. 9C, the floor 62 comprises:
a box-shaped element 62A onto which the first party steps, one open side of the element being curved to match the track of the folded point of the door; and
a triangular element 62B which advances and retreats relative to the inside of the element 62A when the door opens and shuts.

The triangular element 62B is connected to one end of the open surface of the element 62A through a hinge 62C at one end thereof, connected to an other side of the element 62A through a spring 62D which is compressed when the door is opened.

In the above configuration, when the first party enters the telephone booth, the first party operates the height control section 63 so that the moving section 64 is operated. Thereby, the first party's eyes are level with the body 61.

Accordingly, the phone video is the most suitable one for practical use in the telephone booth.

Also, when the door is shut, the spring 62D is expanded so that the triangular element 62B advances from the box-shaped element 62A. Therefore, no opening between the door and the floor is generated. This means that the first party does not catch his leg between the door and the floor 62.

It is preferable that the vertical motion of the floor 62 be automatically started when the first party shuts the door. The reason is that the required time for controlling the height of the floor is shortened.

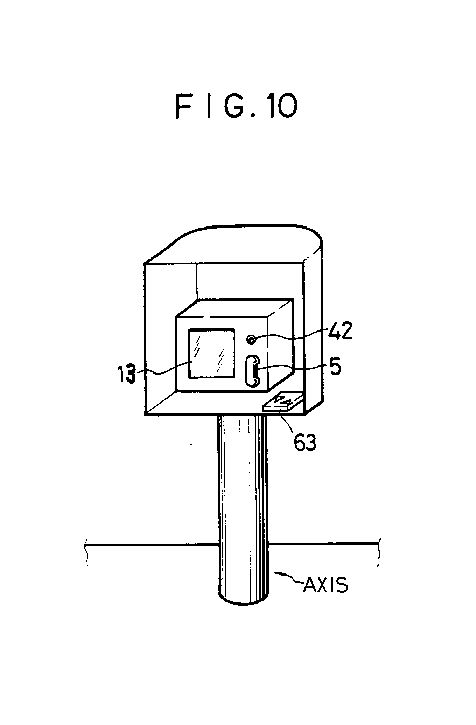

Also, as shown in Fig. 10, it is preferable that the video phone be suitable for practical use in a simple video phone on a street corner, the axis of the phone being moved in vertical motion.

Having illustrated and described the principles of our invention in a preferred embodiment thereof, it should be readily apparent to those skilled in the art that the invention can be modified in arrangement and detail without departing from such principles. We claim all modifications coming within the scope of the accompanying claims.

Reference signs in the claims are intended for better understanding and shall not limit the scope.

## Claims

1. A video phone comprising
display means (2; 13; 22; 35; 43) for displaying a picture provided from a second party;
photographing means (3; 14; 23; 42) for taking a picture of the first party who telecommunicates with the second party;
setting means (4a, 4b; 12, 16, 17, 18a, 18b; 24; 32, 33; 44, 48; 51 - 57; 62 - 67) for setting the position of said display means and said photographing means by the first party at a suitable position for enabling the first party to view the second party's picture and the photographing means to take a picture from the first party; and
transmitting means (46) for transmitting the first party's picture taken by said photographing means to the second party,
**characterized in** that
said setting means comprise adjusting means operable by the first party or automatically so as to adjust the respective height positions of said display means and said photographing means by a movement in a vertical direction relative to the height position of the first party's eyes, wherein said display means and said photographing means are moved together such that said respective height positions correspond to each other.

2. A video phone according to claim 1 in which said display means (2; 13; 22; 35; 43) is a wall-mounted type.

3. A video phone according to claim 1 or 2 in which the position for displaying the second party's picture in the display means (2; 13; 22; 35; 43) is selected at the eye position of the first party, the height being the earliest position for viewing the second party.

4. A video phone according to any of the preceding claims in which the photographing means (3; 14; 23; 42) takes a picture of the first party at the same height at which the second party's picture is displayed by the display means (2; 13; 22; 35; 43).

5. A video phone according to any of the preceding claims in which, when the first party has adjusted the top of a display area to a certain scanning line from the top portion of the display means (2; 13; 22; 35; 43), the display of the second party's picture is automatically started from said certain scanning line from the top portion of the display means by, following a scanning start pulse, automatically providing clock pulses during a vertical blanking period so that the scanning lines before said certain scanning line are shifted.

6. A video phone according to claim 5 in which the number of said clock pulses corresponds to the number of the scanning lines before said certain scanning line.

7. A video phone according to any of the preceding claims in which the photographing means (3; 14; 23; 42) comprises:
an immobile television camera (23) ;
a reflecting mirror (24) for reflecting incident light provided from the first party to the television camera (23), the mirror (24) reflecting the front of the first party.

8. A video phone according to any of the preceding claims, in which the display means (2; 13; 22; 35; 43) includes selecting means (2B, 2C, 32, 34) for automatically selecting the position at which the second party's picture is displayed.

9. A video phone according to claim 7, in which the selecting means (2B, 2C, 32, 34) comprises:
a plurality of energy sources (32) for generating energy;
a plurality of energy detectors (34) for detecting the energy generated in the energy sources (32) across the first party, each energy detector (34) corresponding to one energy source (32) and being arranged in a vertical direction; and
decision means (2B, 2C) for deciding the highest position in the energy detectors (34) not detecting the energy because the energy is cut off by the first party;
selecting means (2B, 2C) for selecting the area in which the second party is displayed after receiving a decision signal provided from the decision section, the top of the second party's picture being identical with the highest position decided by the decision means (2B, 2C).

10. A video phone according to any of the preceding claims, further including:
detecting means (52) for detecting a position of the first party before generating a detecting signal which indicates the position of the first party;
control means (53) for controlling the movement of the display means (43) in accordance with the detecting means (52) to display the second party's picture in a viewing position where the first party can easily view the picture, the control means (53) generating a control signal to control a position of the display means (43); and
moving means (54, 55, 56) for moving the display means (43) to the viewing position in accordance with the control signal provided from the control means (53).

11. A video phone according to any of the preceding claims, further including:
moving means (62) for moving the first party to a viewing position where the first party can easily view the second party's picture displayed by the display means (13) in accordance with the operation by the first party.

12. A video phone according to any of the preceding claims, further including:
moving means (16, 17) for moving the display means (13, 22) to a viewing position where the the first party can easily view the second party's picture displayed by the display means (13, 22) in accordance with the operation by the first party.

## Patentansprüche

1. Videophon, das folgendes aufweist:
eine Anzeigeeinrichtung (2; 13; 22; 35; 43) zum Anzeigen eines von einer zweiten Partei gelieferten Bildes;
eine Fotografiereinrichtung (3; 14; 23; 42) zum Aufnehmen eines Bildes der ersten Partei, die mit der zweiten Partei telekommuniziert;
eine Einstelleinrichtung (4a, 4b; 12, 16, 17, 18a, 18b; 24; 32, 33; 44, 48; 51 - 57; 62 - 67) zum Einstellen der Position der Anzeigeeinrichtung und der Fotografiereinrichtung durch die erste Partei bei einer geeigneter Position, um der ersten Partei zu ermöglichen, das Bild der zweiten Partei anzuschauen, und um der Fotografiereinrichtung zu ermöglichen, ein Bild von der ersten Partei aufzunehmen; und
eine Übertragungseinrichtung (46) zum Übertragen des durch die Fotografiereinrichtung aufgenommenen Bildes der ersten Partei zur zweiten Partei,
dadurch gekennzeichnet, daß
die Einstelleinrichtung eine Einstelleinrichtung aufweist, die durch die erste Partei oder automatisch zum Einstellen der jeweiligen Höhenpositionen der Anzeigeeinrichtung und der Fotografiereinrichtung durch eine Bewegung in einer vertikalen Richtung relativ zur Höhenposition der Augen der ersten Partei betreibbar ist,
wobei die Anzeigeeinrichtung und die Fotografiereinrichtung miteinander derart bewegt werden, daß die jeweilige Höhenpositionen einander entsprechen.

2. Videophon nach Anspruch 1, wobei die Anzeigeeinrichtung (2; 13; 22; 35; 43) vom Wandmontagetyp ist.

3. Videophon nach Anspruch 1 oder 2, wobei die Position zum Anzeigen des Bildes der zweiten Partei in der Anzeigeeinrichtung (2; 13; 22; 35; 43) bei der Augenposition der ersten Partei ausgewählt wird, wobei die Höhe die früheste Position zum Anschauen der zweiten Partei ist.

4. Videophon nach einem der vorangehenden Ansprüche, wobei die Fotografiereinrichtung (3; 14; 23; 42) ein Bild der ersten Partei bei derselben Höhe aufnimmt, bei der das Bild der zweiten Partei durch die Anzeigeeinrichtung (2; 13; 22; 35; 43) angezeigt wird.

5. Videophon nach einem der vorangehenden Ansprüche, wobei dann, wenn die erste Partei die oberste Stelle eines Anzeigebereichs auf eine bestimmte Abtastlinie vom obersten Teil der Anzeigeeinrichtung (2; 13; 22; 35; 43) eingestellt hat, die Anzeige des Bildes der zweiten Partei automatisch von der bestimmten Abtastlinie vom obersten Teil der Anzeigeeinrichtung aus begonnen wird, indem, nach einem Abtast-Startimpuls, Taktimpulse während einer vertikalen Austastperiode automatisch geliefert werden, so daß die Abtastlinien vor der bestimmten Abtastlinie verschoben werden.

6. Videophon nach Anspruch 5, wobei die Anzahl der Taktimpulse der Anzahl der Abtastlinien vor der bestimmten Abtastlinie entspricht.

7. Videophon nach einem der vorangehenden Ansprüche, wobei die Fotografiereinrichtung (3; 14; 23; 42) folgendes aufweist:
eine nicht mobile Fernsehkamera (23);
einen reflektierenden Spiegel (24) zum Reflektieren einfallenden Lichts, das von der ersten Partei zur Fernsehkamera (23) geliefert wird, wobei der Spiegel (24) die Vorderseite der ersten Partei reflektiert.

8. Videophon nach einem der vorangehenden Ansprüche, wobei die Anzeigeeinrichtung (2; 13; 22; 35; 43) eine Auswahleinrichtung (2B, 2C, 32, 34) zum automatischen Auswählen der Position, an der das Bild der zweiten Partei angezeigt wird, enthält.

9. Videophon nach Anspruch 8, wobei die Auswahleinrichtung (2B, 2C, 32, 34) folgendes aufweist:
eine Vielzahl von Energiequellen (32) zum Erzeugen von Energie;
eine Vielzahl von Energiedetektoren (34) zum Erfassen der in den Energiequellen (32) erzeugten Energie über der ersten Partei, wobei jeder Energiedetektor (34) einer Energiequelle (32) entspricht und in einer vertikalen Richtung angeordnet ist; und
eine Entscheidungseinrichtung (2B, 2C) zum Entscheiden über die höchste Position, bei der die Energiedetektoren (34) die Energie nicht erfassen, weil die Energie durch die erste Partei abgeschnitten ist;
eine Auswahleinrichtung (2B, 2C) zum Auswählen des Bereichs, in dem die zweite Partei angezeigt wird, nach einem Empfangen eines von der Entscheidungseinrichtung gelieferten Entscheidungssignal, wobei die oberste Stelle des Bildes der zweiten Partei identisch zu der höchsten Position ist, über die durch die Entscheidungseinrichtung (2B, 2C) entschieden worden ist.

10. Videophon nach einem der vorangehenden Ansprüche, das weiterhin folgendes aufweist:
eine Erfassungseinrichtung (52) zum Erfassen einer Position der ersten Partei vor einem Erzeugen eines Erfassungssignals, das die Position der ersten Partei anzeigt;
eine Steuereinrichtung (53) zum Steuern der Bewegung der Anzeigeeinrichtung (43) gemäß der Erfassungseinrichtung (52), um das Bild der zweiten Partei in einer Anschau-Position anzuzeigen, bei der die erste Partei das Bild leicht anschauen kann, wobei die Steuereinrichtung (53) ein Steuersignal erzeugt, um eine Position der Anzeigeeinrichtung (43) zu steuern; und
eine Bewegungseinrichtung (54, 55, 56) zum Bewegen der Anzeigeeinrichtung (43) zur Anschau-Position gemäß dem von der Steuereinrichtung (53) gelieferten Steuersignal.

11. Videophon nach einem der vorangehenden Ansprüche, das weiterhin folgendes aufweist:
eine Bewegungseinrichtung (62) zum Bewegen der ersten Partei zu einer Anschau-Position, wo die erste Partei das durch die Anzeigeeinrichtung (13) angezeigte Bild der zweiten Partei leicht anschauen kann, und zwar gemäß der Operation durch die erste Partei.

12. Videophon nach einem der vorangehenden Ansprüche, das weiterhin folgendes enthält:
eine Bewegungseinrichtung (16, 17) zum Bewegen der Anzeigeeinrichtung (13, 22) zu einer Anschau-Position, wo die erste Partei das durch die Anzeigeeinrichtung (13, 2) angezeigte Bild der zweiten Partei leicht anschauen kann, und zwar gemäß der Operation durch die erste Partei.

## Revendications

1. Vidéophone comprenant
un moyen d'affichage (2 ; 13 ; 22 ; 35 ; 43) destiné à afficher une vue fournie par un second interlocuteur,
un moyen de photographie (3 ; 14 ; 23 ; 42) destiné à prendre une vue du premier interlocuteur qui télécommunique avec le second interlocuteur,
un moyen de réglage (4a, 4b ; 12, 16, 17, 18a, 18b ; 24 ; 32, 33 ; 44, 48 ; 51 à 57 ; 62 à 67) pour régler la position dudit moyen d'affichage et dudit moyen de photographie par le premier interlocuteur à une position appropriée pour permettre au premier interlocuteur de voir la vue du second interlocuteur et le moyen de photographie pour prendre une vue à partir du premier interlocuteur, et
un moyen de transmission (46) destiné à transmettre la vue du premier interlocuteur prise par ledit moyen de photographie vers le second interlocuteur,
**caractérisé en ce que**
ledit moyen de réglage comprend un moyen d'ajustement qui peut être mis en oeuvre par le premier interlocuteur ou automatiquement de façon à ajuster les positions en hauteur respectives dudit moyen d'affichage et dudit moyen de photographie par un mouvement suivant une direction verticale relativement à la position en hauteur des yeux du premier interlocuteur, dans lequel ledit moyen d'affichage et ledit moyen de photographie sont déplacés ensemble de façon à ce que lesdites positions en hauteur respectives correspondent l'une à l'autre.

2. Vidéophone selon la revendication 1, dans lequel ledit moyen d'affichage (2 ; 13; 22 ; 35 ; 43) est du type à montage sur un mur.

3. Vidéophone selon la revendication 1 ou 2, dans lequel la position destinée à afficher la vue du second interlocuteur dans le moyen d'affichage (2 ; 13 ; 22 ; 35 ; 43) est sélectionnée à la position de l'oeil du premier interlocuteur, la hauteur étant la première position permettant d'observer le second interlocuteur.

4. Vidéophone selon l'une quelconque des revendications précédentes dans lequel le moyen de photographie ( 3; 14 ; 23 ; 42) prend une vue du premier interlocuteur à la même hauteur que celle à laquelle la vue du second interlocuteur est affichée par le moyen d'affichage (2 ; 13 ; 22 ; 35 ; 43).

5. Vidéophone selon l'une quelconque des revendications précédentes, dans lequel, lorsque le premier interlocuteur a ajusté le haut de la zone d'affichage sur une certaine ligne de balayage par rapport à la partie supérieure du moyen d'affichage (2 ; 13 ; 22 ; 35 ; 43), l'affichage de la vue du second interlocuteur est automatiquement débuté à partir de ladite certaine ligne de balayage en partant de la partie supérieure du moyen d'affichage, après une impulsion de début de balayage, en appliquant automatiquement des impulsions d'horloge pendant une période de suppression de faisceau vertical de façon à ce que les lignes de balayage avant ladite certaine ligne de balayage soient décalées.

6. Vidéophone selon la revendication 5, dans lequel le nombre desdites impulsions d'horloge correspond au nombre des lignes de balayage avant ladite certaine ligne de balayage.

7. Vidéophone selon l'une quelconque des revendications précédentes, dans lequel le moyen de photographie (3 ; 14 ; 23 ; 42) comprend :
une caméra de télévision immobile (23) ;
un miroir réfléchissant (24) destiné à réfléchir la lumière incidente appliquée par le premier interlocuteur à la caméra de télévision (23), le miroir (24) réfléchissant le devant du premier interlocuteur.

8. Vidéophone selon l'une quelconque des revendications précédentes, dans lequel le moyen d'affichage (2 ; 13 ; 22 ; 35 ; 43) comprend un moyen de sélection (2B, 2C, 32, 34) destiné à sélectionner automatiquement la position à laquelle la vue du second interlocuteur est affichée.

9. Vidéophone selon la revendication 7, dans lequel le moyen de sélection (2B, 2C, 32, 34) comprend :
une pluralité de sources d'énergie (32) destinées à générer de l'énergie,
une pluralité de détecteurs d'énergie (34) destinées à détecter l'énergie générée dans les sources d'énergie (32) sur l'étendue du premier interlocuteur, chaque détecteur d'énergie (34) correspondant à une source d'énergie (32) et étant agencé suivant une direction verticale, et
un moyen de décision (2B, 2C) destiné à définir la position la plus élevée des détecteurs d'énergie (34) qui ne détectent pas l'énergie du fait que l'énergie est coupée par le premier interlocuteur,
un moyen de sélection (2B, 2C) destiné à sélectionner la zone dans laquelle le second interlocuteur est affiché après la réception d'un signal de décision fourni à partir de la section de décision, le haut de la vue du second interlocuteur étant identique à la position la plus élevée définie par le moyen de décision (2B, 2C).

10. Vidéophone selon l'une quelconque des revendications précédentes, comprenant en outre :
un moyen de détection (52) destiné à détecter une position du premier interlocuteur avant de générer un signal de détection qui indique la position du premier interlocuteur,
un moyen de commande (53) destiné à commander le mouvement du moyen d'affichage (43) conformément au moyen de détection (52) afin d'afficher la vue du second interlocuteur à une position d'observation où le premier interlocuteur peut facilement observer la vue, le moyen de commande (53) générant un signal de commande afin de commander une position du moyen d'affichage (43), et
un moyen de déplacement (54, 55, 56) destiné à déplacer le moyen d'affichage (43) vers la position d'observation conformément au signal de commande fourni à partir du moyen de commande (53).

11. Vidéophone selon l'une quelconque des revendications précédentes, comprenant en outre :
un moyen de déplacement (62) destiné à déplacer le premier interlocuteur jusqu'à une position d'observation où le premier interlocuteur peut facilement observer la vue du second interlocuteur affichée par le moyen d'affichage (13) conformément à l'actionnement du premier interlocuteur.

12. Vidéophone selon l'une quelconque des revendications précédentes, comprenant en outre :
un moyen de déplacement (16, 17) destiné à déplacer le moyen d'affichage (13, 22) jusqu'à une position d'observation où le premier interlocuteur peut facilement observer la vue du second interlocuteur affichée par le moyen d'affichage (13, 22) conformément à l'actionnement du premier interlocuteur.
